# EUROPÄISCHE PATENTANMELDUNG

(11) **EP 4 309 760 A1**
(43) Veröffentlichungstag der Anmeldung: **24.01.2024**
(21) Anmeldenummer: 22185589.3
(22) Anmeldetag: 19.07.2022
(51) Int. Cl.: B01D 39/18, B01D 29/01, B01D 29/56, B01D 37/02, B01J 20/24, B01J 20/26, B01J 20/28, C12H 1/02, C12H 1/12

(54) **FILTERSCHICHT**

(71) Anmelder: Filtrox AG, 9000 St. Gallen (CH)
(72) Erfinder: Mühlemann, Reto, 9000 St. Gallen (CH); Studer, Clemens, 7050 Arosa (CH); Haag, Dennis, 9472 Grabs (CH); Frank, Brian, 9000 St. Gallen (CH)
(74) Vertreter: Hepp Wenger Ryffel AG

(57) **Zusammenfassung**

Die Erfindung betrifft eine Filterschicht enthaltend eine Faserstoff-Matrix und ein in die Faserstoff-Matrix eingebettetes Adsorbens zur gezielten Entfernung von Stoffen, welche den Geschmack beeinträchtigen, insbesondere aus Wein, sowie eine Filteranlage mit einer solchen Filterschicht, eine Verwendung einer solchen Filterschicht, ein Verfahren zur Herstellung einer solchen Filterschicht und ein Verfahren zur Entfernung von Phenolen aus Wein.

Die Filterschicht enthält eine Faserstoff-Matrix, vorzugsweise mit Fasern aus Cellulose, und ein in die Faserstoff-Matrix eingebettetes Adsorbens. Das Adsorbens weist einen Gewichtsanteil zwischen 15% und 60%, bevorzugt zwischen 20% und 35%, auf. Das Adsorbens enthält Zelluloseester Partikel, vorzugsweise Zelluloseacetatproprionat-Partikel, wobei mindestens 80% der Partikel einen Durchmesser kleiner als 200 µm aufweisen. Alternativ oder zusätzlich enthält das Adsorbens Zelluloseester Fasern (2), vorzugsweise Zelluloseacetat-Fasern, wobei mindestens 80% der Fasern eine Faserlänge von 0.5-5mm, bevorzugt von 1-3mm, und einen grössten Aussendurchmesser (D) von 10 µm bis 200 µm, bevorzugt 20 µm bis 100 µm, aufweisen.

## Beschreibung

Die Erfindung betrifft eine Filterschicht enthaltend eine Faserstoff-Matrix und ein in die Faserstoff-Matrix eingebettetes Adsorbens zur gezielten Entfernung von Stoffen, welche den Geschmack beeinträchtigen, insbesondere aus Wein, sowie eine Filteranlage mit einer solchen Filterschicht, eine Verwendung einer solchen Filterschicht, ein Verfahren zur Herstellung einer solchen Filterschicht und ein Verfahren zur Entfernung von Phenolen aus Wein.

Filterschichten sind für vielfältige Anwendungen in den unterschiedlichsten Zusammensetzungen bekannt.

Filterschichten, die vorwiegend zur Fest/Flüssigtrennung eingesetzt werden, besitzen im Allgemeinen eine Zellstofffaser-Matrix aus pflanzlicher Cellulose. Zur Bewältigung von anspruchsvollen Filtrationsaufgaben werden in die Zellstofffaser-Matrix Filterhilfsmittel eingebaut. Bei diesen handelt es sich üblicherweise um Kieselguren, Perlite, Aktivkohle und/oder PVPP.

In der Weinproduktion ist insbesondere ein unkontrollierter Beigeschmack, der aufgrund flüchtiger Phenole vorhanden ist, ein grosses Problem. Flüchtige Phenole, insbesondere 4-Ethylphenol ("4-EP") und 4-Ethylguajacol ("4-EG") werden gebildet, wenn die Trauben mit Brettanomyces-Hefen oder Dekkera-Hefen kontaminiert sind. Der Geschmack erinnert an Tinte, Klebstoff, Pferdeschweiss, Leder oder Stall und kann als Schimmelgeschmack, Brettgeschmack oder "mold taste" bezeichnet werden. Die Hefen kommen in allen Weinanbaugebieten vor, treten aber vermehrt in den wärmeren Regionen auf.

Die Entwicklung von Brettanomyces kann durch Zugabe von Schwefeldioxid oder durch Zugabe von Chitosan während der Reifung und Klärung eingeschränkt werden. Die Brettanomyces Population kann jedoch lebensfähig bleiben. Alternativ oder zusätzlich kann eine Dampfbehandlung, eine Ozonbehandlung, ein zweites Toasten oder eine Ultraschallbehandlung der Holzfässer, in denen der Wein ausgebaut werden soll, vorgenommen werden.

Larcher, Puecher, Rohregger, Malacarne und Nicolini haben in Food Chemistry 132 (2012) 2126-2130 veröffentlicht, dass der Gehalt von 4-EP und 4-EG in Wein durch die Zugabe von Zelluloseacetat (CA)-, Zelluloseacetatproprionat (CAP)- oder Zelluloseproprionat (CP)-Fasern verringert wird. Dazu wurden bis zu 20 g/l der Fasern 60 Minuten lang in einem kontaminierten Rotwein belassen. Bei einer Dosis von 4 g/l verringert sich der Phenolgehalt um bis zu 40%. Die Fasern müssen wieder aus dem Wein entfernt werden und können regeneriert werden.

WO2020041253 A1 offenbart einen Filterartikel mit Zellulose-Esterstapelfasern, zum Beispiel Zelluloseacetet und Zelluloseacetatproprionat, der eine verbesserte Entwässerungsrate bieten kann. Der Filterartikel kann eine kleine Porengrösse aufweisen und auch zum Filtrieren von Wein verwendet werden. Eine Abreicherung flüchtiger Phenole ist nicht gezeigt.

Es ist daher eine Aufgabe der Erfindung, die Nachteile des Bekannten zu vermeiden, insbesondere also eine Filterschicht, eine Filteranlage und ein Verfahren zur Verfügung zu stellen, welche eine rasche, möglichst selektive und kostengünstige Entfernung von den Geschmack beeinträchtigenden Stoffen, insbesondere von Phenolen, aus fluiden Zusammensetzungen, insbesondere aus Wein ermöglichen.

Die Aufgabe wird gelöst durch eine Filterschicht enthaltend eine Faserstoff-Matrix und ein in die Faserstoff-Matrix eingebettetes Adsorbens zur gezielten Entfernung von Stoffen, welche den Geschmack beeinträchtigen, aus fluiden Medien, insbesondere aus Wein, eine Filteranlage mit einer solchen Filterschicht, eine Verwendung einer solchen Filterschicht, ein Verfahren zur Herstellung einer solchen Filterschicht, sowie ein Verfahren zum Entfernen von Phenolen mit einer solchen Filterschicht gemäss den unabhängigen Patentansprüchen.

Unter einer Filterschicht wird im Rahmen der Erfindung eine, insbesondere flächige, Struktur verstanden, durch welche hindurch ein fluides Medium geleitet werden kann unter Abtrennung von unerwünschten Bestandteilen wie z.B. Feststoffen und/oder insbesondere in Lösung vorliegenden Geschmacks- und/oder Geruchsstoffen. Bevorzugt handelt es sich um eine Tiefenfilterschicht mit einer Dicke von mindestens 1mm. Alternativ sind auch Filtermembranen denkbar.

Im Rahmen der Erfindung sind Filterschichten, insbesondere flächig, vorkonfektionierte Filterblätter, beispielsweise hergestellt aus aufbereiteten Zellstoffen mit eingearbeiteten Füllstoffen.

Die Filterschicht umfasst eine Faserstoff-Matrix, welche für einen definierten dreidimensionalen Zusammenhalt der Filterschicht im Trockenzustand sorgt. Hierbei kann es sich um eine Faserstoff-Matrix handeln, vorzugsweise mit Fasern aus Cellulose, die durch ein fachübliches Nassfestmittel, zum Beispiel PAAE-Harze, fixiert sein kann.

Die Faserstoff-Matrix dient als mechanisches Gerüst der Filterschicht, in dem Filterhilfsmittel angeordnet sind.

In die Faserstoff-Matrix ist ein Adsorbens eingebettet.

Das fluide Medium kann durch die Filterschicht hindurchgeleitet werden, wobei das Adsorbens in der Filterschicht verbleibt.

Das Adsorbens weist einen Gewichtsanteil zwischen 10% und 60%, bevorzugt zwischen 20% und 35%, auf.

Das Adsorbens enthält Zelluloseester Partikel, insbesondere Zelluloseacetatester Partikel, vorzugsweise Zelluloseacetatproprionat-Partikel, oder besteht daraus.

Das Adsorbens kann alternativ Zelluloseacetat-, Zellulosecetatbutyrate- oder Celluloseproprionat-Partikel enthalten.

Mindestens 80% der Partikel weisen einen Durchmesser auf, der kleiner als 300µm ist, bevorzugt kleiner als 200µm, weiter bevorzugt kleiner als 100µm.

Bevorzugt weisen mindestens 80% der Partikel einen Durchmesser auf, der grösser als 5µm ist, bevorzugt grösser als 10µm ist. Unter dem Durchmesser der Partikel wird die Korngrösse oder der Äquivalentdurchmesser verstanden, die beispielsweise durch eine Siebung ermittelt werden können.

Alternativ oder zusätzlich enthält das Adsorbens Zelluloseester Fasern, vorzugsweise Zelluloseacetat-Fasern, oder besteht daraus.

Das Adsorbens kann alternativ Zelluloseacetatproprionat-, Zellulosecetatbutyrate- oder Celluloseproprionat-Fasern enthalten.

Mindestens 80% der Fasern weisen eine Faserlänge von 0.5-5mm, bevorzugt von 1-3mm, und einen grössten Aussendurchmesser von 10µm bis 200µm, bevorzugt 20µm bis 100µm, auf. Unter dem Aussendurchmesser wird der Durchmesser in einer Richtung senkrecht zur Längsausdehnung der Faser verstanden.

Handelt es sich um Holhfasern, so weisen mindestens 80% der Fasern einen grössten Aussendurchmesser von 10µm bis 200µm auf. Handelt es sich um Vollfasern, so weisen mindestens 80% der Fasern einen grössten Aussendurchmesser von 2µm bis 100µm auf. Bei einer Faser mit rundem Querschnitt ist der Aussendurchmesser in allen Richtungen senkrecht zur Längsausdehnung der Faser gleich gross und entspricht somit dem grössten Aussendurchmesser. In der Regel sind die Querschnitte der Fasern nicht kreisrund. Als Referenzgrösse wird daher der grösste Aussendurchmesser verwendet.

Typischerweise variiert der Aussendurchmesser über die Längsausdehnung der Faser wenig. Als Referenzgrösse kann der grösste Aussendurchmesser verwendet werden.

Es hat sich gezeigt, dass Filterschichten mit einem Adsorbens wie oben beschrieben homogen und dauerhaft haltbar sind. Insbesondere lassen sich Zelluloseester Fasern gleichmässig und dauerhaft in eine Filtermatrix einbetten.

Eine homogene Filterschicht weist sowohl entlang ihrer Oberfläche als auch entlang ihrer dreidimensionalen Struktur eine konstante Fähigkeit auf, geschmacksbeeinträchtigende Stoffe zu entfernen. Insbesondere können flüchtige Phenole, wie 4-EP und 4-EG, entfernt werden.

Homogene Filterschichten können nach der Herstellung konfektioniert werden, also z.B. mittels Stanzung oder Hochdruck-Wasserschneidern, auf gewünschte Filterquerschnitte zurechtgeschnitten werden.

Die Filterschichten sind ausserdem bis zu einem gewissen Grad haltbar, sodass sie von einer grossen Menge fluiden Mediums und/oder mehrfach durchströmt werden können, ohne dass sich das Adsorbens aus der Faserstoff-Matrix löst. Mit solchen Filterschichten können in einer typischen Filteranlage zum Beispiel 500-600l flüssigen Mediums gefiltert werden.

Gleichzeitig ist das Adsorbens in der Filterschicht ausreichend umströmbar, sodass es für die Entfernung eines signifikanten Teils der geschmacksbeeinträchtigenden Stoffe, insbesondere von 4-EP und 4-EG, sorgt.

Die Dicke der Filterschicht kann 1.5-6mm, insbesondere 3.5-4.5mm, betragen. Filterschichten dieser Dicke bieten einerseits eine Tiefe der Faserstoff-Matrix, die dem eingebetteten Adsorbens genügend Halt bietet und in der eine ausreichenden Menge an Adsorbens vorhanden ist, andererseits sind sie noch gut konfektionierbar.

Das Flächengewicht der Filterschicht beträgt beispielsweise 1000-1800g/m², insbesondere 1300-1500g/m².

Der Wasserwert oder die Durchflusszahl der Filterschicht kann bei 1bar Differenzdruck 50-600 l/(m²*min), insbesondere 150-500 l/(m²*min) betragen. Der Wasserwert oder die Durchflusszahl geben die Permeation von reinem Wasser durch die Schicht an und bilden eine Vorgabe für eine Qualitätskontrolle der Schichten.

Der Wasserwert ist somit ein Maß für die Permeatleistung der Filterschicht.

Das Adsorbens enthält bevorzugt Zelluloseester-Hohlfasern, bevorzugt Zelluloseacetat-Hohlfasern. Hohlfasern bieten durch das Vorhandensein einer nach aussen und einer nach innen weisenden Fläche eine vergleichsweise grosse gesamte Oberfläche. Da die adsorbierende Wirkung vor allem an der Oberfläche erfolgt, ist eine besonders hohe Wirksamkeit gegeben.

Der grösste Innendurchmesser der Hohlfaser beträgt bevorzugt zwischen 40% und 80% des grössten Aussendurchmessers.

Die Hohlfasern müssen keinen runden Querschnitt und keine konstante Wanddicke aufweisen. Daher werden der grösste Innendurchmesser und der grösste Aussendurchmesser als Referenzwerte verwendet.

Bei den genannten Grössenverhältnissen kann das Innere der Hohlfasern von dem durchströmenden Fluid erreicht werden und die Oberfläche im Innern der Hohlfaser stellt einen nennenswerten Anteil der Gesamtoberfläche der Hohlfaser zur Verfügung.

Die Filterschicht kann weitere Inhaltsstoffe enthalten, wie Kieselgur, Perlit, Nassfestmittel und/oder Alumosilikat.

Perlit ist ein mineralisches Gestein aus vulkanischer Aktivität. Kieselgur ist ein fossiles Mineral pflanzlichen Ursprungs. Perlit und Kieselgur können bei der Filtration von Flüssigkeiten im Lebensmittelbereich als Filterhilfsmittel eingesetzt werden. Die Filterhilfsmittel verhindern zusammen mit der Fasermatrix, dass Feststoffe aus dem durchströmenden Fluid den Filter verstopfen oder in das Filtrat geraten.

Nassfestmittel erhöhen die Festigkeit der Filterschicht. Um zu verhindern, dass sich die Bindungen zwischen den Fasern durch Wasser lösen lassen, werden bei der Herstellung Nassfestmittel hinzugegeben, die neue kovalente Bindungselemente zwischen den Fasern schaffen. Wichtige Nassfestmittel sind beispielweise Harze auf der Basis von Polyamidoamin-Epichlorhydrin (PAAE), Melamin-Formaldehyd (MF) oder Harnstoff-Formaldehyd (HF).

Als weiteres Adsorbens kann die Filterschicht ein Alumosilikat enthalten, auch unter dem Namen Zeolith bekannt, insbesondere ein Aluminiumsilikat mit Hohlraumstruktur. Beispielweise ist aus der EP07103040 A1 bekannt, dass Zeolith 2,4,6-Trichloranisol binden kann, jedoch andere erwünschte Geschmacksstoffe des Weins im Wesentlichen nicht zu binden vermag. Zusätzlich zum durch Phenole erzeugten unerwünschten Geschmack kann eine Filterschicht wie oben beschrieben, die auch Alumosilikat enthält, den Korkgeschmack verringern.

Das Adsorbens, insbesondere in Form von Zelluloseester Fasern, kann ein Fasergewicht von grösser 3 den aufweisen, insbesondere von grösser 20 den.

Zelluloseester-Hohlfasern werden zumeist mit einem Fasergewicht von grösser 20 den hergestellt.

Es hat sich gezeigt, dass Zelluloseester Fasern mit einem Fasergewicht von grösser 3 den sehr gut in der Lage sind, Phenole zu binden.

Denkbar wäre auch das Durchführen einer Anschwemmfiltration, bei der ein Adsorbens, wie oben beschrieben, in das zu filtrierende fluide Medium gegeben wird und eine Trägerschicht mit einer Faserstoffmatrix, wie oben beschrieben, angeströmt wird. Das Adsorbens und die herausgelösten Stoffe verbleiben in der Faserstoffmatrix.

Erfindungsgemäss besitzt eine Filteranlage mindestens ein Filterelement, das mindestens eine Filterschicht wie oben beschrieben aufweist. Filterelemente besitzen in der Regel Klarelemente und Trubelemente, zwischen denen mindestens eine Filterschicht angebracht ist. Die Filterelemente können Öffnungen besitzen, über die das Unfiltrat zu den Filterschichten geführt werden kann und Öffnungen, über die das Filtrat abgeführt wird.

Filterelemente können in einer Filteranlage so angeordnet sein, dass mehrere Filterelemente parallel durchströmbar sind. Es kann auch eine Anordnung vorgesehen sein, die eine serielle Durchströmung von Filterelementen ermöglicht.

Erfindungsgemäss wird eine Filterschicht wie oben beschrieben zur Entfernung von Phenolen aus Wein, der mit Brettanomyces kontaminiert ist, verwendet. Die Filterschicht kann dazu, beispielsweise in einer Filteranlage wie oben beschrieben, vom Wein durchströmt werden, wobei die Konzentration der Phenole reduziert wird.

Die oben beschriebene Filterschicht kann auch zum Wiederherstellen des Aromas von Wein, der von gerauchten Reben stammt, verwendet werden. Gerauchte Reben sind Reben, die von einem Brandschaden in Mitleidenschaft gezogen wurden.

Des Weiteren kann die oben beschriebene Filterschicht zum Entfernen von Pestiziden eingesetzt werden.

Ein erfindungsgemässes Verfahren zum Herstellen einer Filterschicht wie oben beschrieben umfasst zumindest die folgenden Schritte.

Zellulosefasern sowie Zelluloseester-Partikel, vorzugsweise Zelluloseacetatproprionat-Partikel, und/oder Zelluloseester-Fasern, vorzugsweise Zelluloseacetat-Fasern, können in einen Pulper eingetragen werden. Bei dem Pulper kann es sich um einen Hochleistungsrührer handeln.

Alternativ werden die Zelluloseester-Partikel und/oder Zelluloseester-Fasern mit Wasser aufgeschlämmt und vor dem sogenannten "Wet End" einer Papiermaschine mit Zellulose und gegebenenfalls anderen Inhaltsstoffen vermischt. Bevorzugt wird mindestens fünf Minuten lang gemischt.

Es kann zunächst eine Filterhilfsmittel, wie Perlit oder Kieselgur, zum Beispiel in einer Konzentration von 10-60g/l, und anschliessend das Adsorbens, zum Beispiel in einer Konzentration von 20-120g/l, eingerührt werden. Die Rührzeit kann 5-20 Minuten betragen.

Zelluloseester-Fasern können in raffinierte Zellulosefasern eingearbeitet werden.

Die Zelluloseester Partikel und/oder die Zelluloseester Fasern weisen einen Gewichtsanteil zwischen 15% und 60%, bevorzugt zwischen 20% und 35%, an der gesamten Mischung der Filterschicht auf.

Mindestens 80% der Zelluloseester-Partikel weisen einen Durchmesser zwischen 5µm und 300µm, bevorzugt zwischen 10µm und 100µm, auf. Mindestens 80% der Zelluloseester-Fasern weisen eine Faserlänge von 0.5mm-5mm und einen grössten Aussendurchmesser von 10µm bis 200µm auf.

Anschliessend erfolgen ein Entwässern, insbesondere auf einer Langsieb-Papiermaschine, und ein Trocknen.

Die Zelluloseester-Partikel und/oder die Zelluloseester-Fasern werden durch das Verfahren in eine Matrix aus Zellulosefasern eingebettet.

Ein erfindungsgemässes Verfahren zur Entfernung von Phenolen aus Wein, der mit Brettanomyces kontaminiert ist, umfasst zumindest den Schritt des mindestens einmaligen Durchleitens durch mindestens eine Filterschicht wie oben beschrieben. Die Filterschicht kann auch mehrmals durchströmt werden.

Der kontaminierte Wein kann mindestens zweimal durch eine Filteranlage, die mindestens eine Filterschicht umfasst, geleitet werden.

Der Wein kann mit einer Rate von 100 bis zu 200 l/(m²*h) durch die mindestens eine Filterschicht geführt werden.

Die Erfindung wird nachfolgend anhand von Figuren aus Ausführungsbeispielen erläutert, ohne den Gegenstand der Erfindung auf die gezeigten Ausführungsbeispiele zu beschränken. Es zeigen
- Figur 1: ein Beispiel für ein Filterelement mit Filterschicht und einen Trubrahmen;
- Figur 2: eine schematische Darstellung einer Filteranlage;
- Figur 3: eine schematische Darstellung einer Zelluloseester Faser.

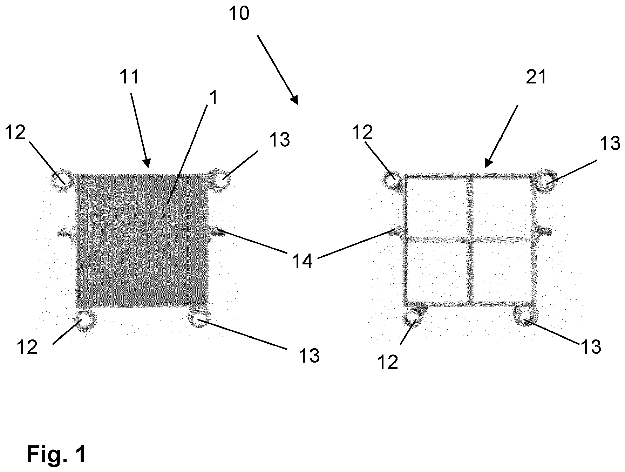

Figur 1 zeigt ein Beispiel für ein Filterelement 10, das ein Klarelement 11 mit Filterschicht 1, sowie einem Trubelement 21 umfasst.

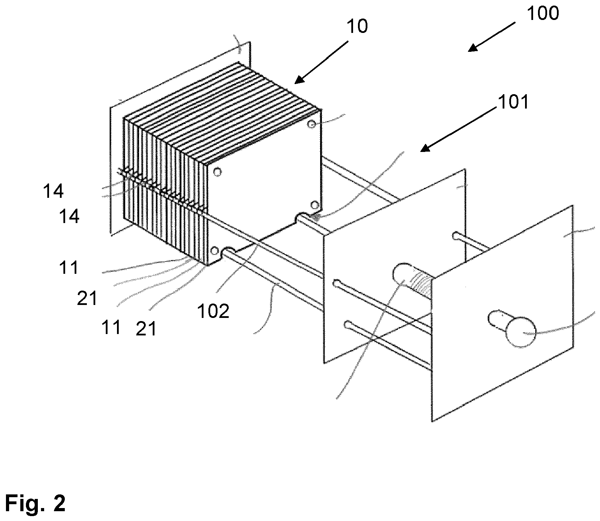

Die Filterschicht 1 wird zwischen dem Klarelement 11 und dem Trubelement 21 eingesetzt. Die Filterschicht 1 kann an einem der Elemente 11, 21 befestigt sein, oder beim Zusammenfahren der Elemente 11, 21 in der Filteranlage 100 (siehe Figur 2) zwischen Klarelement 11 und Trubelement 21 eingespannt werden.

Die typischen Abmessungen einer Filterschicht 1 sind beispielweise 40cm x 40cm.

Eine Filterschicht 1 kann beispielweise Gewichtsanteile von
- 7-10%, insbesondere 8-9%, an Hartholzzellulose, zum Beispiel mit Faserlängen im mm-Bereich;
- 20-30%, insbesondere 23-27%, an Weichholzzellulose, zum Beispiel mit Faserlängen im mm-Bereich;
- 12-18%, insbesondere 14-16%, an Kieselgur, zum Beispiel mit Partikelgrössen zwischen 2µm und 130 µm;
- 3-10%, insbesondere 4-7%, an Perlit,
- 6-10%, insbesondere 7.5-8.5%, an Nassfestmittel,
- 3-8%, insbesondere 4-5%, an Alumosilikat,
   Sowie
- einem Adsorbens mit einen Gewichtsanteil zwischen 20% und 55%;
aufweisen.

Bei dem Adsorbens kann es sich um ein Zelluloseacetatproprionatpulver mit einem Verestererungsgrad von 45% handeln, wobei die 80% der Partikel eine Partikelgrösse zwischen 123 und 175 µm aufweisen. Das Pulver kann mit einem Gewichtsanteil von 29 bis 34% an allen Bestandteilen eingebettet sein.

Bei dem Adsorbens kann es sich um Zelluloseacetatfasern mit einem Verestererungsgrad von 40% und einem Fasergewicht von 1.5den handeln, wobei die Fasern im Mittel eine Faserlänge von 3mm aufweisen. Die Fasern können mit einem Gewichtsanteil von 20 bis 30% an allen Bestandteilen eingebettet sein.

Bei dem Adsorbens kann es sich um Zelluloseacetatfasern mit einem Fasergewicht von 2.5den handeln, wobei die Fasern im Mittel eine Faserlänge von 1.5mm aufweisen. Die Fasern können mit einem Gewichtsanteil von 20 bis 30% an allen Bestandteilen eingebettet sein.

Bei dem Adsorbens kann es sich um Zelluloseacetathohlfasern mit einem Fasergewicht von 21den handeln, wobei die Fasern im Mittel eine Faserlänge von 1mm aufweisen. Die Fasern können mit einem Gewichtsanteil von 20 bis 26% an den übrigen Bestandteilen eingebettet sein.

Das Trubelement 21 weist Öffnungen 12 für die Zufuhr von Unfiltrat auf und das Klarelement 11 weist Öffnungen 13 für die Abfuhr von Filtrat auf. Das Klarelement 11 sowie das Trubelement 21 weisen ausserdem Halteelemente 14 auf.

Die Unfiltratzufuhr erfolgt jeweils über eine obere und untere Öffnung 12 vom Trubelement 21 und die Filtratabfuhr über eine obere und untere Öffnung 13 vom Klarelement 11. Der Filtratfluss erfolgt also seitwärts.

Filterelemente 10 können in bekannter Weise in einer Filteranlage 100, wie sie schematisch in Figur 2 gezeigt ist, zusammengefügt werden. Die Klarelemente 11 werden abwechselnd mit Trubelementen 21 nacheinander auf einem Gestell 101 angeordnet, wobei die Halteelemente 14 auf Gestellstangen 102 aufliegen.

Das Unfiltrat wird in die Filteranlage 100 gepumpt und füllt die Trubelemente 21. Durch die Druckdifferenz zwischen Filtrat- und Unfiltratseite wird das Unfiltrat durch die Filterschichten 1 in die Klarelemente 11 gedrückt. Das Filtrat wird dann aus der Filteranlage 100 abgeführt.

Die Filteranlage 100 kann auch mehrfach durchströmt werden.

Beispielweise kann kontaminierter Wein mit einer Flussrate von 150 l/(m²*h) und einer Leistung von 300 l/m² gefiltert werden.

Über die Flussrate wird, bevorzugt mittels einer Pumpe, die Kontaktzeit der Inhaltsstoffe der Filterschicht mit dem Medium, in diesem Fall Wein, gesteuert.

Die Kapazität oder Leistung ist ein Mass für die totale Aufnahmemenge der Filterschicht, die typischerweise in Volumen pro Fläche Filterschicht angegeben wird. Die Kapazität ist unabhängig von der Flussrate. Die Kapazität hängt von der Sättigung des Adsorbens in der Filterschicht ab.

Es hat sich herausgestellt, dass
- Wein, der mit einem Anteil an 4-EP von kleiner 1800µg/l kontaminiert ist, vollständig wieder herstellbar ist,
- Wein, der mit einem Anteil an 4-EP von 1800µg/l bis 3000µg/l kontaminiert ist, teilweise wieder herstellbar ist,
- bei Wein, der mit einem Anteil an 4-EP grösser 4000µg/l kontaminiert ist, der Brettgeschmack entfernt werden kann, jedoch der Weincharakter nicht wieder vollständig hervorkommt.

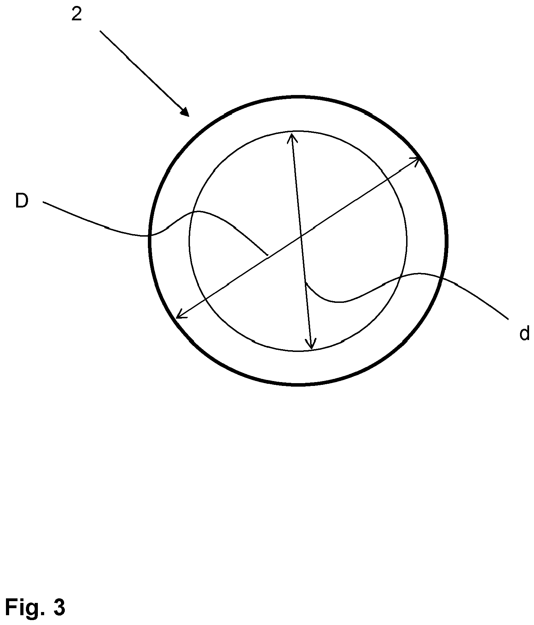

Figur 3 zeigt eine schematische Querschnittsdarstellung einer Zelluloseester-Faser 2, die als Adsorbens in einer Filterschicht 1 (siehe Figur 1) eingebettet sein kann.

Der grösste Aussendurchmesser D hat eine Länge von etwa 10 µm. Der grösste Innendurchmesser d beträgt etwa 70%-80% vom grössten Aussendurchmesser D. Die Hohlfaser 2 führt im Gegensatz zu einer Vollfaser zu einer höheren Porosität und bietet eine wesentlich grössere Oberfläche.

## Patentansprüche

1. Filterschicht (1) enthaltend eine Faserstoff-Matrix, vorzugsweise mit Fasern aus Cellulose, und ein in die Faserstoff-Matrix eingebettetes Adsorbens zur gezielten Entfernung von Stoffen, welche den Geschmack beeinträchtigen, aus fluiden Medien, insbesondere aus Wein,
wobei das Adsorbens einen Gewichtsanteil zwischen 10% und 60%, bevorzugt zwischen 20% und 35%, aufweist und
das Adsorbens Zelluloseester-Partikel, vorzugsweise Zelluloseacetatproprionat-Partikel, enthält, wobei mindestens 80% der Partikel einen Durchmesser aufweisen, der kleiner als 300µm, bevorzugt kleiner als 100µm ist,
und/oder
das Adsorbens Zelluloseester-Fasern (2), vorzugsweise Zelluloseacetat-Fasern, enthält, wobei mindestens 80% der Fasern eine Faserlänge von 0.5-5mm, bevorzugt von 1-3mm, und einen grössten Aussendurchmesser von 10µm bis 200µm, bevorzugt 20µm bis 100µm, aufweisen.

2. Filterschicht gemäss Anspruch 1, wobei
die Dicke der Filterschicht (1) 1-5mm, insbesondere 3.5-4.5mm beträgt.

3. Filterschicht gemäss Anspruch 1 oder 2, wobei das Flächengewicht der Filterschicht (1) 1000-1800g/m², insbesondere 1300-1500g/m², beträgt.

4. Filterschicht gemäss Anspruch 1, 2 oder 3, wobei der Wasserwert der Filterschicht (1) 50-600 l/(m²*min), insbesondere 150-5000 l/(m²*min), beträgt.

5. Filterschicht gemäss einem der vorhergehenden Ansprüche, wobei das Adsorbens Zelluloseester-Hohlfasern, bevorzugt Zelluloseacetat-Hohlfasern, enthält.

6. Filterschicht gemäss Anspruch 5, wobei der grösste Innendurchmesser der Zelluloseester-Hohlfaser zwischen 40% und 80% des grössten Aussendurchmessers beträgt.

7. Filterschicht gemäss einem der vorhergehenden Ansprüche, wobei die Filterschicht (1) weitere Inhaltsstoffe, nämlich Kieselgur, Perlit, Nassfestmittel und/oder Alumosilikat, enthält.

8. Filterschicht gemäss einem der vorhergehenden Ansprüche, wobei das Adsorbens ein Fasergewicht von grösser 3 den aufweist, insbesondere von grösser 20 den.

9. Filteranlage (100) mit mindestens einem Filterelement (10), das mindestens eine Filterschicht (1) gemäss einem der vorhergehenden Ansprüche aufweist.

10. Verwendung einer Filterschicht (1) gemäss einem der vorhergehenden Ansprüche 1-8 zur Entfernung von Phenolen aus Wein, insbesondere aus Wein, der mit Brettanomyces kontaminiert ist und/oder der von gerauchten Reben stammt.

11. Verfahren zum Herstellen einer Filterschicht (1) gemäss einem der vorhergehenden Ansprüche 1-8, mit den Schritten Eintragung von Zellulosefasern sowie von Zelluloseester Partikel, vorzugsweise Zelluloseacetatproprionat-Partikel, und/oder Zelluloseester Fasern, vorzugsweise Zelluloseacetat-Fasern, in einen Pulper, Entwässern und Trocknen.

12. Verfahren zur Entfernung von Phenolen aus Wein, der mit Brettanomyces kontaminiert ist, umfassend den Schritt des mindestens einmaligen Durchleitens durch mindestens eine Filterschicht (1) gemäss einem der Ansprüche 1-8.

13. Verfahren gemäss Anspruch 12, wobei der Wein mit einer Rate von 100 l/(m²*h) bis zu 200 l/(m²*h) durch die mindestens eine Filterschicht (1) geführt wird.
